# FASCICULE DE BREVET EUROPEEN

(11) **EP 3 353 055 B1**
(45) Date de publication et mention de la délivrance du brevet: **19.05.2021**
(21) Numéro de dépôt: 16770020.2
(22) Date de dépôt: 22.09.2016
(51) Int. Cl.: B64D 11/06

(54) **ARRANGEMENT DE CABINE D'AÉRONEF OPTIMISÉ POUR L'INTÉGRATION DE SIÈGES POUR PERSONNEL NAVIGANT**
OPTIMIERTE FLUGZEUGKABINENANORDNUNG ZUM EINBAU VON SITZEN FÜR DIE BESATZUNG
AIRCRAFT CABIN ARRANGEMENT OPTIMISED FOR THE INSTALLATION OF SEATS FOR THE FLIGHT CREW

(30) Priorité: 22.09.2015 US 201562221832 P
(43) Date de publication de la demande: 01.08.2018
(73) Titulaire: Safran Seats, 78370 Plaisir (FR)
(72) Inventeur: GILL, Alison, 31100 Toulouse (FR); LEBEGUE, Brice, 36100 Issoudun (FR); MESAROS, Alexandre, 36100 Issoudun (FR); VERBEQUE, Jérôme, 31770 Colomiers (FR); MARTIN, Claude, 18120 Lury sur Arnon (FR)
(74) Mandataire: Marconnet, Sébastien
(86) Numéro de dépôt international: PCT/EP2016/072567
(87) Numéro de publication internationale: WO 2017/050912

(56) Documents cités:
- EP-A1- 2 724 938
- EP-A2- 2 574 551
- DE-A1-102007 012 376
- DE-A1-102007 019 341
- US-A1- 2014 252 830

## Description

La présente invention porte sur un arrangement de cabine d'aéronef optimisé pour l'intégration de sièges pour personnel navigant. L'invention trouve une application particulièrement avantageuse, mais non exclusive, avec l'aménagement de cabine d'aéronefs de type monocouloir.

De nouvelles règlementations étendent le champ d'application de la limitation de temps de travail du personnel navigant commercial (ou PNC) en vol aux opérateurs moyens et court-courriers. Ces réglementations autorisent néanmoins une extension du temps de travail en vol au-delà de la limite imposée si des installations spécifiques dédiées au repos du personnel navigant sont disponibles et utilisées durant une durée définie.

Pour répondre à ce besoin qui existait auparavant sur les long-courriers bi-couloirs, deux solutions ont été retenues, à savoir soit l'utilisation de sièges pour personnel navigant grand conforts dit "HCCAS" (pour "High Comfort Cabin Attendant Seat" en anglais) en cabine, soit l'aménagement de compartiments munis de couchettes sous le plancher de la cabine dits LDMCR (pour "Lower Deck Mobile Crew Rest" en anglais).

Le volume disponible sous le plancher pour les avions monocouloirs étant plus faible, seule l'implantation de sièges grand confort est envisageable. Toutefois, cette solution a pour inconvénient de réduire le nombre de sièges disponibles pour les passagers.

Le document DE102007019341 décrit un module de repos pour le personnel de bord comportant une zone de repos et une zone intermédiaire de travail accessible par une échelle.

Le document DE102007012376 décrit un compartiment prévu pour loger au moins un membre d'un équipage d'aéronef comprenant un siège et une zone de stockage.

Le document EP2574551 décrit un poste de pilotage comportant un siège, une porte d'accès, et un passage permettant l'accès au siège.

L'invention vise donc à faciliter l'intégration des sièges grand confort pour le personnel navigant, tout en minimisant l'impact sur la densité des sièges passagers en cabine.

A cet effet, l'invention a pour objet un arrangement de cabine d'aéronef selon la revendication 1.

L'invention permet ainsi, grâce à l'occupation d'un espace présent dans le meuble par le siège grand confort, de limiter au maximum la suppression de sièges de passagers lors de l'implantation des sièges grand confort dans la cabine de l'aéronef.

Selon une réalisation, le meuble est choisi notamment parmi un des meubles suivants: un module de cuisine, un module de sanitaire, ou un module de rangement.

Selon une réalisation, le siège grand confort est séparé physiquement d'une zone dédiée aux passagers.

Selon une réalisation, dans le cas d'une installation en partie avant de la cabine, le meuble comporte:
- deux repose-pieds pour des sièges passagers attenants, et
- un siège pour personnel navigant standard apte à prendre une position de stockage et une position assise, ledit siège pour personnel navigant standard étant positionné entre deux compartiments de stockage,
- de sorte que le siège grand confort s'étend au moins en partie dans l'espace du meuble entre les deux compartiments de stockage lorsque le siège grand confort est dans la position de repos et que le siège pour personnel navigant standard est dans la position de stockage.

Selon une réalisation, dans le cas d'une installation en partie avant de la cabine, un siège pour personnel navigant standard est fixé à un module de sanitaire, le meuble comportant:
- deux repose-pieds pour les sièges passagers attenants,
- un siège grand confort, notamment orienté face à la marche,
- deux compartiments de stockage de part et d'autre du siège grand confort.

Selon une réalisation, le meuble comporte en outre:
- une cloison rétractable s'étendant le long d'un couloir pour assurer une vision directe en position assise, et/ou
- un rideau entre le module de sanitaire et le meuble du côté d'un couloir pour permettre l'isolation du siège grand confort.

Selon une réalisation, dans le cas d'une installation en milieu de cabine, un module de repos, assurant une séparation entre une classe affaire et une classe économique, comprend:
- une cloison avant et une cloison arrière pour assurer l'isolation du module de repos,
- deux sièges grand confort positionnés côte-à-côte,
- un rideau ou une cloison mobile de séparation avec un couloir de la cabine, et
- un rideau ou une cloison mobile de séparation entre les deux sièges grand confort.

Selon une réalisation, dans le cas d'une installation en milieu de cabine, un module de repos, assurant la séparation entre une classe affaire et une classe économique, comprend :
- une cloison avant et une cloison arrière pour assurer une isolation du module de repos,
- un siège grand confort monté face ou dos à la marche du côté d'un fuselage, et
- un module auxiliaire monté du côté d'un couloir.

Selon une réalisation, le module auxiliaire est choisi parmi un des modules suivants: un module de sanitaire, un module de cuisine, un compartiment de stockage ou bien un module de self-service.

Selon une réalisation, dans le cas d'une installation en partie arrière de la cabine, le siège grand confort situé à proximité d'une porte arrière est apte à s'étendre au moins en partie dans un espace aménagé dans une partie d'un module de cuisine.

Selon une réalisation, dans le cas d'une installation en partie arrière de la cabine, un module, dit hybride, comporte:
- une première partie intégrant un module de cuisine, et
- une deuxième partie intégrant deux sièges grand confort séparés l'un de l'autre par une cloison ou un rideau.

Selon une réalisation, le siège grand confort comporte une assise extensible, un dossier inclinable jusqu'à 45 degrés par rapport à la verticale, un repose-jambes et un repose-pieds extensible par rapport au repose-jambes.

Bien entendu les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles:
- Les figures 1a à 1c, sont des vues en perspective illustrant les différentes positions d'un siège pour personnel navigant grand confort intégré dans les arrangements de cabine selon l'invention;
- La figure 2a est une vue illustrant un premier mode de réalisation de l'arrangement selon l'invention dans le cas d'une implantation en partie avant de la cabine d'aéronef;
- La figure 2b est une vue détaillée du meuble couplé avec le siège de l'arrangement de la figure 2a;
- La figure 3a est une vue illustrant un deuxième mode de réalisation de l'arrangement selon l'invention dans le cas d'une implantation en partie avant de la cabine d'aéronef;
- La figure 3b est une vue détaillée du meuble couplé avec le siège de l'arrangement de la figure 3a;
- Les figures 4a à 4c sont des vues illustrant trois modes de réalisation de l'arrangement selon l'invention dans le cas d'une implantation en milieu de cabine de l'aéronef;
- Les figures 5a et 5b sont des vues illustrant deux modes de réalisation de l'arrangement selon l'invention dans le cas d'une implantation en partie arrière de l'aéronef.

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

Dans la suite de la description, les termes "face à la marche" et "dos à la marche" définissent une orientation des sièges à l'intérieur de la cabine de l'aéronef, c'est-à-dire qu'un élément "face à la marche" est tourné vers le cockpit de l'avion et qu'un élément "dos à la marche" est tourné du côté opposé. La direction de déplacement de l'aéronef correspond à la direction D sur les figures. La partie "avant" de la cabine est située du côté du cockpit tandis que la partie "arrière" de la cabine est située du côté opposé. Par ailleurs, les termes "droit" et "gauche" sont entendus par référence au sens commun que donnerait à ces termes une personne positionnée à l'intérieur de la cabine et regardant vers l'avant de la cabine suivant la direction D.

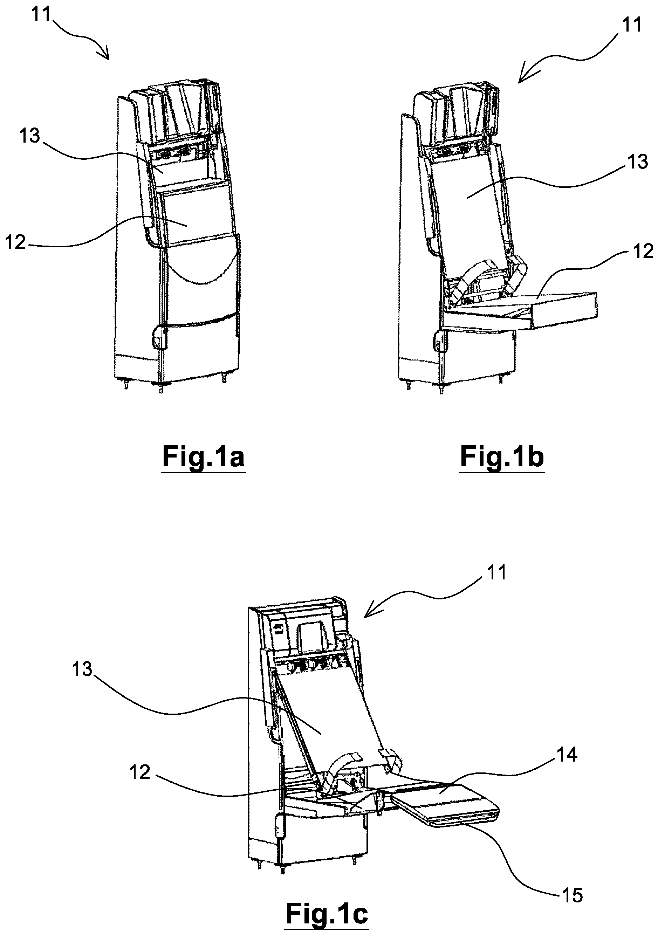

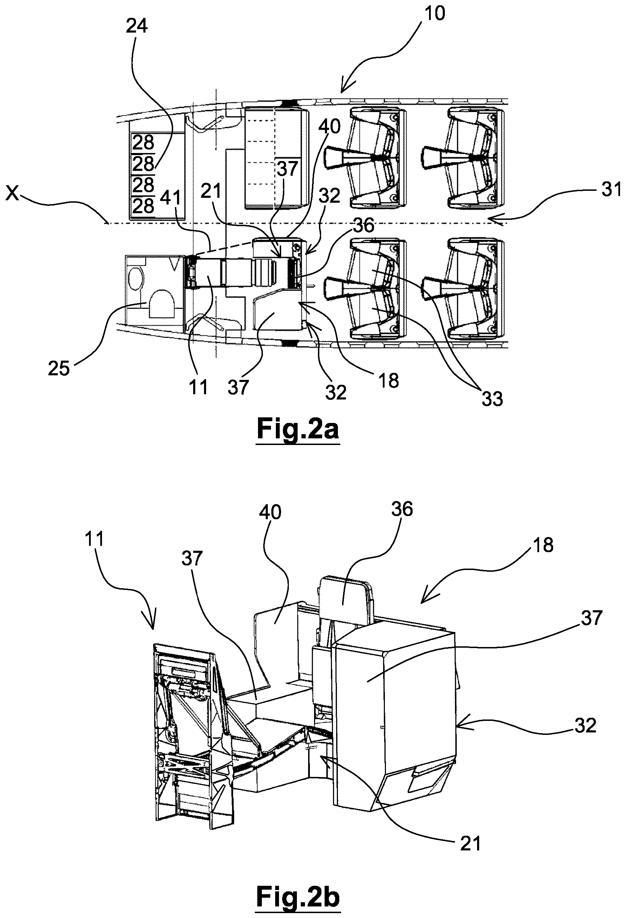

Les figures 2a, 3a, 4a, 4b, 4c, 5a, et 5b montrent un arrangement de cabine d'aéronef 10 comportant au moins un siège pour personnel navigant, dit siège grand confort 11. Comme cela est illustré par les figures 1a, 1b, et 1c, Ce siège grand confort 11 comporte de préférence une assise extensible 12, un dossier 13, et un repose-jambes 14 qui pourra être muni d'un repose-pieds 15 extensible par rapport au repose-jambes 14.

Le siège 11 comporte une cinématique lui permettant d'être mobile entre une position stockée dans laquelle l'assise 12 est rabattue contre le dossier 13 du siège pour libérer le passage autour du siège tel que montré en figure 1a, une position assise remplissant les normes de sécurité lors des phases de roulage, de décollage et d'atterrissage de l'avion (position TTL pour "Taxi, Take Off, Landing" en anglais), tel que montré sur la figure 1b, et au moins une position de repos dans laquelle le dossier 13 est incliné par rapport à la verticale et le repose-jambes 14 porte les jambes de l'utilisateur.

Le siège 11 pourra par exemple comporter huit positions de repos distinctes dans lesquelles les angles d'inclinaison relatifs des différents éléments sont différents. Le dossier 13 peut être incliné jusqu'à 45 degrés par rapport à la verticale. Le siège 11 pourra être manœuvré au moyen d'une poignée pour passer d'une position à l'autre. Avantageusement, le siège 11 revient en position stockée de façon assistée.

Conformément à l'invention, le siège grand confort 11 est couplé à un meuble 18. Le siège 11 pourra être installé dans un espace prévu dans le meuble 18, ou être apte à s'étendre au moins en partie dans un espace 21 présent dans le meuble 18 lorsque le siège se trouve dans la position de repos. Le meuble 18 est choisi parmi un des meubles suivants: un module de cuisine 24, un module de sanitaire 25, un module de rangement, ou tout autre module adapté à l'application.

On rappelle qu'un module de cuisine 24 est un meuble comprenant notamment des chariots 28, des espaces de stockage, et des équipements pour pouvoir cuisiner ou réchauffer des aliments. Une des caractéristiques importantes du module de cuisine 24 est le nombre de stockage de chariots 28 ou de demi-chariots 28' qu'il peut contenir, car il est nécessaire pour les compagnies de disposer d'un certain nombre de chariots qui dépend de la capacité de l'appareil.

Le module de sanitaire 25 comporte notamment des toilettes, un lavabo, ainsi qu'une poubelle.

Avantageusement, le siège grand confort 11 est séparé physiquement de la zone dédiée aux passagers de manière à être situé dans une zone de la cabine 10 dans laquelle le bruit et l'intensité lumineuse sont limités.

On décrit ci-après, en référence aux figures 2 à 5, l'intégration du siège grand confort 11 à l'intérieur d'une cabine d'aéronef mono-couloir, c'est-à-dire à couloir unique référencé 31. Bien entendu, l'invention pourra également être mise en œuvre pour des cabines bi-couloirs. Sur les figures, l'axe X correspond à l'axe d'allongement longitudinal de l'avion.

Comme cela est illustré par la figure 2a, dans le cas d'une installation en partie avant de la cabine 10, le siège grand confort 11 est fixé sur une paroi d'un module de sanitaire 25.

Le meuble 18 intègre deux repose-pieds 32 en face arrière pour les sièges passagers 33 attenants. En outre, un siège 36 pour personnel navigant standard est positionné entre deux compartiments de stockage 37. Un tel siège standard 36 est apte à prendre une position stockée et une position assise, mais ne dispose pas d'une position de repos, comme c'est le cas pour le siège grand confort 11. Le siège standard 36 est positionné en vis-à-vis du siège grand confort 11. En variante, les sièges 11 et 36 pourront être décalés l'un par rapport à l'autre suivant une direction transversale perpendiculaire à l'axe X.

Comme cela est visible sur la figure 2b, le siège grand confort 11 s'étend au moins en partie dans l'espace 21 du meuble 18 délimité par les deux parois en vis-à-vis des compartiments de stockage 37 lorsque le siège grand confort 11 est dans la position de repos et que le siège standard 36 est dans la position de stockage. Les deux sièges pour personnel navigant 11 et 36 qui se font face peuvent être utilisés simultanément en position assise.

Le meuble 18 comporte en outre une cloison rétractable 40 s'étendant le long du couloir 31 pour assurer à la personne installée dans le siège grand confort 11 une vision directe, c'est-à-dire une vision sans obstacle sur les allées et la cabine 10 en position assise. Conformément à la règlementation, la vision directe du personnel navigant sur les passagers permet de s'assurer que ces derniers sont en sécurité. La vision directe doit couvrir au moins 50% de chaque classe de passagers.

En outre, un rideau 41, représenté en pointillés sur la figure 2a, pourra s'étendre entre le module de sanitaire 25 et le meuble 18 du côté du couloir 31. Ce rideau 41 permet l'isolation du siège grand confort 11 lors des phases de repos.

Une telle configuration permet de ne pas modifier le nombre de sièges de passagers, tout en conservant un nombre suffisant de sièges pour personnel navigant utilisables en position assise.

Suivant une variante de réalisation, le meuble 18 est dépourvu de siège pour personnel navigant standard 36 et intègre un repose-pied indépendant du siège grand confort 11. Il sera également possible de combler les espaces situés autour du repose-pieds implanté dans le meuble 18 par des zones de rangement supplémentaires.

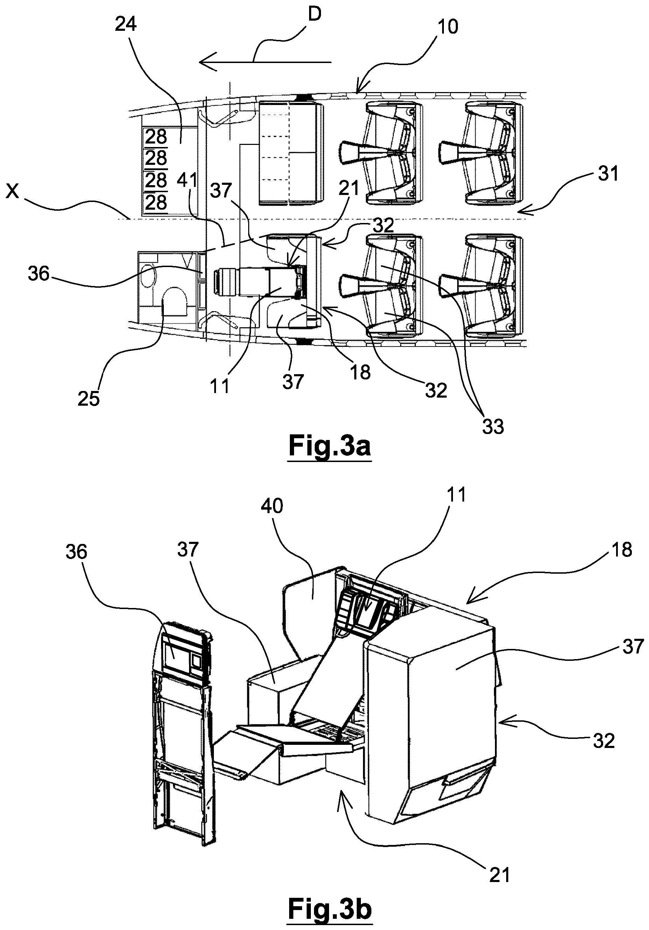

La figure 3a montre un deuxième arrangement possible dans le cas d'une installation du siège 11 en partie avant de la cabine 10. Suivant cet arrangement 10, un siège pour personnel navigant standard 36 est fixé à un module de sanitaire 25. Ce siège standard 36 pourra être simple ou double, c'est-à-dire qu'il pourra comporter une seule ou deux assises 12 pour recevoir deux personnes.

Par ailleurs, le meuble 18 comporte deux repose-pieds 32 pour les sièges passagers 33 attenants, et un siège grand confort 11 orienté face à la marche. Comme on peut le voir sur la figure 3b, deux compartiments de stockage 37 sont prévus de part et d'autre du siège grand confort 11. Autrement dit, le siège grand confort 11 est implanté dans l'espace 21 entre les deux compartiments de stockage 37, ce qui limite l'encombrement de l'ensemble.

Le siège grand confort 11 est positionné en face du siège pour personnel standard 36. Le siège grand confort 11 peut ainsi prendre une position de repos lorsque le siège standard 36 est dans la position de stockage. En variante, les sièges 11 et 36 pourront être décalés l'un par rapport à l'autre suivant une direction transversale perpendiculaire à l'axe X.

Le meuble 18 comporte en outre une cloison rétractable 40 s'étendant le long du couloir 31 pour assurer à la personne installée dans le siège standard une vision directe sur les allées et la cabine en position assise. En outre, un rideau 41, représenté en pointillés sur la figure 3a, pourra s'étendre entre le module de sanitaire 25 et le meuble 18 du côté du couloir 31. Ce rideau 41 permet l'isolation du siège grand confort 11 lors des phases de repos.

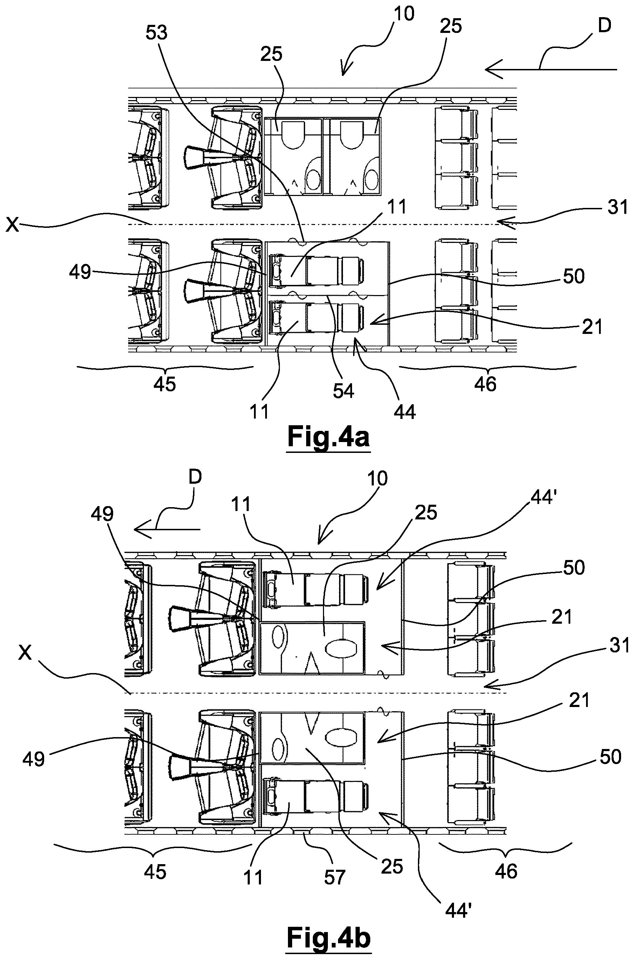

Comme cela est illustré par la figure 4a, dans le cas d'une installation en milieu de cabine, un module de repos 44 assure une séparation entre la classe affaire 45 et la classe économique 46. Ce module 44 comprend une cloison avant 49 et une cloison arrière 50 pour assurer l'isolation du module 44 par rapport à l'environnement sonore et lumineux de la cabine.

En outre, deux sièges grand confort 11 sont positionnés côte-à-côte dans l'espace 21 délimité par les cloisons 49 et 50. Ces sièges 11 sont représentés comme étant orientés dos à la marche, mais pourront en variante être orientés face à la marche.

On prévoit également de préférence un rideau ou une cloison mobile de séparation 53 avec le couloir 31 de la cabine 10, ainsi qu'un rideau ou une cloison mobile de séparation 54 entre les deux sièges grand confort 11.

Une telle configuration impose toutefois de supprimer 12 sièges passagers en milieu de cabine et d'en récupérer six en fond de cabine en relocalisant deux modules de sanitaire 25 en face du module de repos 44. Cette configuration est particulièrement adaptée lorsque deux sièges grand confort 11 ou plus sont demandés car aucune modification du module de cuisine 24 arrière n'est nécessaire.

Dans le mode de réalisation de la figure 4b, un module de repos 44' assure la séparation entre la classe affaire 45 et la classe économique 46. Ce module de repos 44' comprend une cloison avant 49 et une cloison arrière 50 pour assurer une isolation du module 44' par rapport à l'environnement sonore et lumineux de la cabine 10.

A l'intérieur de l'espace 21 délimité par les cloisons 49, 50, un siège grand confort 11 est monté face ou dos à la marche du côté du fuselage 57, et un module de sanitaire 25 est monté du côté du couloir 31. En l'occurrence, on utilise deux modules de repos 44' positionnés à l'intérieur de la cabine 10 de façon symétrique par rapport à l'axe X.

Une telle configuration impose de supprimer six sièges passagers par module en milieu de cabine et d'en récupérer, le cas échéant, trois en fond de cabine.

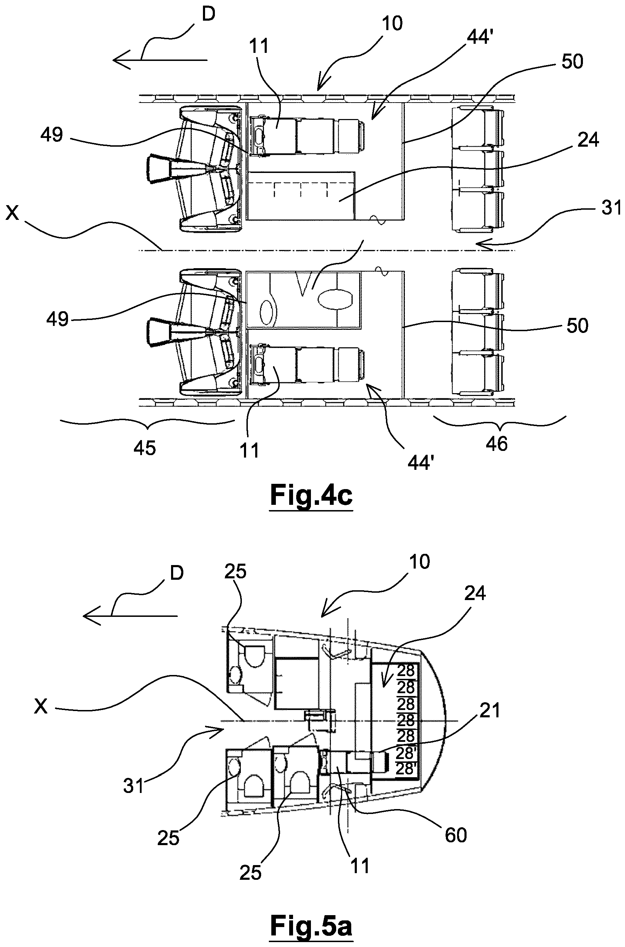

Dans le mode de réalisation de la figure 4c, le module de sanitaire 25 droit est remplacé par un module de cuisine 24. En variante, on pourra associer le siège grand confort 11 à un compartiment de stockage ou à un distributeur de boissons et de produits alimentaires.

Comme cela est illustré par la figure 5a, dans le cas d'une installation en partie arrière de la cabine 10, un siège grand confort 11 orienté dos à la marche et situé à proximité d'une porte arrière 60 est apte à s'étendre au moins en partie dans un espace 21 aménagé dans une partie d'un module de cuisine 24.

A cet effet, l'espace 21 pourra être obtenu en plaçant par exemple deux demi-chariots 28' dans des espace adaptés à la réception de chariots complets 28, l'écart entre le volume occupé par les demi-chariots 28 et l'espace disponible définissant un volume libre permettant de recevoir au moins une partie du siège grand confort 11 lorsque ce dernier est en position de repos. Le module de cuisine 24 pourra par exemple comporter cinq chariots 28 et deux demi-chariots 28'.

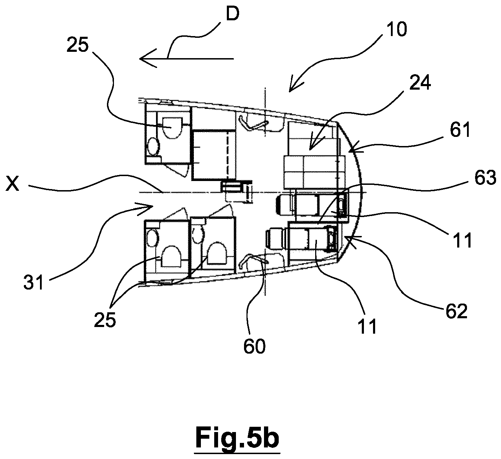

Dans le mode de réalisation de la figure 5b, un module hybride situé en partie arrière de la cabine 10 comporte une partie droite 61 intégrant un module de cuisine 24, et une partie gauche 62 intégrant deux sièges grand confort 11 séparés l'un de l'autre par une cloison 63. En variante, la cloison 63 pourra être remplacée par un rideau.

Une telle configuration nécessite de relocaliser deux modules de sanitaire 25 supprimés à l'arrière de la cabine en milieu de cabine 10, par exemple pour assurer une séparation entre deux zones de la cabine, par exemple entre la classe affaire 45 et la classe économique 46.

Bien évidemment, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention.

## Revendications

1. Aéronef comportant:
- une cabine d'aéronef contenant des sièges de passagers, et
- un arrangement de cabine d'aéronef (10) comportant:
- au moins un siège pour personnel navigant, dit siège grand confort (11), apte à prendre une position stockée, une position assise, et au moins une position de repos, et
- au moins un meuble (18),
ledit siège grand confort étant intégré dans ladite cabine d'aéronef, notamment de type monocouloir, et étant installé dans un espace (21) prévu dans le meuble (18), ou est apte à s'étendre au moins en partie dans un espace (21) aménagé dans le meuble (18) lorsque ledit siège grand confort (11) se trouve dans la position de repos,
**caractérisé en ce que** en partie avant de la cabine (10), on sélectionne un arrangement parmi:
- un premier arrangement dans lequel le meuble (18) comporte:
- deux repose-pieds (32) pour des sièges passagers (33) attenants,
- deux compartiments de stockage (37), et
- un siège pour personnel navigant standard (36) apte à prendre une position de stockage et une position assise, ledit siège pour personnel navigant standard (36) étant positionné entre les deux compartiments de stockage (37),
de sorte que le siège grand confort (11) s'étend au moins en partie dans l'espace (21) du meuble (18) entre les deux compartiments de stockage (37) lorsque le siège grand confort (11) est dans la position de repos et que le siège pour personnel navigant standard (36) est dans la position de stockage, ou
- un deuxième arrangement dans lequel le siège pour personnel navigant standard (36) est fixé à un module de sanitaire (25), le meuble (18) comportant:
- deux repose-pieds (32) pour les sièges passagers (33) attenants,
- un siège grand confort (11), notamment orienté face à la marche,
- deux compartiments de stockage (37) de part et d'autre du siège grand confort (11), de sorte que le siège grand confort (11) est implanté dans un espace (21) entre les deux compartiments de stockage (37),
- le siège grand confort (11) étant positionné en face du siège pour personnel naviguant standard (36), de sorte que le siège grand confort (11) peut prendre une position de repos lorsque le siège pour personnel naviguant standard (36) est dans la position de stockage.

2. Aéronef selon la revendication 1, **caractérisé en ce que** le meuble (18) est choisi notamment parmi un des meubles suivants: un module de cuisine (24), un module de sanitaire (25), ou un module de rangement.

3. Aéronef selon la revendication 1 ou 2, **caractérisé en ce que** le siège grand confort (11) est séparé physiquement d'une zone dédiée aux passagers.

4. Aéronef selon la revendication 1, **caractérisé en ce que** le meuble (18) comporte en outre:
- une cloison rétractable (40) s'étendant le long d'un couloir (31) pour assurer une vision directe en position assise, et/ou
- un rideau (41) entre le module de sanitaire (25) et le meuble (18) du côté d'un couloir (31) pour permettre l'isolation du siège grand confort (11).

5. Aéronef selon l'une quelconque des revendications 1 à 4, **caractérisé en ce que**, en milieu de cabine (10), un module de repos (44), assurant une séparation entre une classe affaire (45) et une classe économique (46), comprend:
- une cloison avant (49) et une cloison arrière (50) pour assurer l'isolation du module de repos (44),
- deux sièges grand confort (11) positionnés côte-à-côte,
- un rideau ou une cloison mobile de séparation (53) avec un couloir (31) de la cabine (10), et
- un rideau ou une cloison mobile de séparation (54) entre les deux sièges grand confort (11).

6. Aéronef selon l'une quelconque des revendications 1 à 5, **caractérisé en ce que**, en milieu de cabine, un module de repos (44'), assurant la séparation entre deux zones de la cabine, par exemple entre une classe affaire et une classe économique, comprend :
- une cloison avant (49) et une cloison arrière (50) pour assurer une isolation du module de repos (44'),
- un siège grand confort (11) monté face ou dos à la marche du côté d'un fuselage (57), et
- un module auxiliaire (25) monté du côté d'un couloir (31).

7. Aéronef selon la revendication 6, **caractérisé en ce que** le module auxiliaire est choisi parmi un des modules suivants: un module de sanitaire (25), un module de cuisine (24), un compartiment de stockage (37) ou bien un module de self-service.

8. Aéronef selon l'une quelconque des revendications 1 à 7, **caractérisé en ce que**, en partie arrière de la cabine (10), un siège grand confort (11) situé à proximité d'une porte arrière (60) est apte à s'étendre au moins en partie dans un espace (21) aménagé dans une partie d'un module de cuisine (24).

9. Aéronef selon l'une quelconque des revendications 1 à 8, **caractérisé en ce que**, en partie arrière de la cabine (10), un module, dit hybride, comporte:
- une première partie (61) intégrant un module de cuisine (24), et
- une deuxième partie (62) intégrant deux sièges grand confort (11) séparés l'un de l'autre par une cloison (63) ou un rideau.

10. Aéronef selon l'une quelconque des revendications 1 à 9, **caractérisé en ce que** le siège grand confort (11) comporte une assise extensible (12), un dossier (13) inclinable jusqu'à 45 degrés par rapport à la verticale, un repose-jambes (14) et un repose-pieds (15) extensible par rapport au repose-jambes (14).

## Patentansprüche

1. Flugzeug, umfassend:
- eine Flugzeugkabine mit Passagiersitzen und
- eine Flugzeugkabinenanordnung (10), umfassend:
- mindestens einen Besatzungssitz, sogenannten Hochkomfortsitz (11), der in eine Lagerungsposition, eine Sitzposition und mindestens eine Ruheposition gebracht werden kann, und
- mindestens einen Schrank (18),
wobei der Hochkomfortsitz in der Flugzeugkabine, insbesondere vom Typ mit einem einzigen Gang, integriert, und in einem Raum (21) im Schrank (18) installiert ist, oder sich zumindest teilweise in einen Raum (21) im Schrank (18) erstrecken kann, wenn sich der Hochkomfortsitz (11) in der Ruheposition befindet,
**dadurch gekennzeichnet, dass** im vorderen Teil der Kabine (10) eine Anordnung ausgewählt ist:
- aus einer ersten Anordnung, bei der der Schrank (18) umfasst:
- zwei Fußstützen (32) für benachbarte Passagiersitze (33),
- zwei Ablagefächer (37) und
- einen Standardbesatzungssitz (36), der in eine Lagerungsposition und eine Sitzposition gebracht werden kann, wobei der Standardbesatzungssitz (36) zwischen den beiden Ablagefächern (37) positioniert ist, so dass sich der Hochkomfortsitz (11) zumindest teilweise in den Raum (21) im Schrank (18) zwischen den beiden Ablagefächern (37) erstreckt, wenn sich der Hochkomfortsitz (11) in der Ruheposition und der Standardbesatzungssitz (36) in der Lagerungsposition befindet, oder
- aus einer zweiten Anordnung, bei der der Standardbesatzungssitz (36) an einem Sanitärmodul (25) angebracht ist, wobei der Schrank (18) umfasst:
- zwei Fußstützen (32) für die angrenzenden Passagiersitze (33),
- einen besonders in Bewegungsrichtung ausgerichteten Hochkomfortsitz (11),
- zwei Ablagefächer (37) auf beiden Seiten des Hochkomfortsitzes (11), so dass sich der Hochkomfortsitz (11) in einem Raum (21) zwischen den beiden Ablagefächern (37) befindet;
- wobei Der Hochkomfortsitz (11) dem Standardbesatzungssitz (36) zugewandt positioniert ist, so dass der Hochkomfortsitz (11) in eine Ruheposition gebracht werden kann, wenn sich der Standardbesatzungssitz (36) in der Lagerungsposition befindet.

2. Flugzeug nach Anspruch 1, **dadurch gekennzeichnet, dass** der Schrank (18) insbesondere aus einem der folgenden Schränke ausgewählt ist: einem Küchenmodul (24), einem Sanitärmodul (25) oder einem Aufräumungsmodul.

3. Flugzeug nach Anspruch 1 oder 2, **dadurch gekennzeichnet, dass** der Hochkomfortsitz (11) physikalisch von einem Passagierbereich getrennt ist.

4. Flugzeug nach Anspruch 1, **dadurch gekennzeichnet, dass** der Schrank (18) ferner umfasst:
- eine einziehbare Trennwand (40), die sich entlang eines Ganges (31) erstreckt, um eine direkte Sicht in einer Sitzposition zu gewährleisten, und/oder
- einen Vorhang (41) zwischen dem Sanitärmodul (25) und dem Schrank (18) an der Seite eines Ganges (31) zum Isolieren des Hochkomfortsitzes (11).

5. Flugzeug nach einem der Ansprüche 1 bis 4, **dadurch gekennzeichnet, dass** in der Mitte der Kabine (10) ein Ruhemodul (44) zum Trennen einer Business Class (45) und einer Economy Class (46) voneinander umfasst:
- eine vordere Trennwand (49) und eine hintere Trennwand (50) zum Isolieren des Ruhemoduls (44);
- zwei nebeneinander angeordnete Hochkomfortsitze (11),
- einen Vorhang oder eine bewegliche Trennwand (53), zur Gewährleistung einer Trennung von einem Gang (31) in der Kabine (10), und
- einen Vorhang oder eine bewegliche Trennwand (54) zur Gewährleistung einer Trennung zwischen den beiden Hochkomfortsitzen (11).

6. Flugzeug nach einem der Ansprüche 1 bis 5, **dadurch gekennzeichnet, dass** in der Mitte der Kabine ein Ruhemodul (44') zur Gewährleistung einer Trennung zwischen zwei Bereichen in der Kabine, beispielsweise zwischen einer Business Class und einer Economyklasse, umfasst:
- eine vordere Trennwand (49) und eine hintere Trennwand (50) zum Isolieren des Ruhemoduls (44'),
- einen Hochkomfortsitz (11), der an der Seite eines Rumpfes (57) in oder entgegen der Bewegungsrichtung montiert ist, und
- einen Hilfsmodul (25), das an der Seite eines Ganges (31) angebracht ist.

7. Flugzeug nach Anspruch 6, **dadurch gekennzeichnet, dass** der Hilfsmodul aus einem der folgenden Module ausgewählt ist: einem Sanitärmodul (25), einem Küchenmodul (24), einem Ablagefach (37) oder einem Selbstbedienungsmodul.

8. Flugzeug nach einem der Ansprüche 1 bis 7, **dadurch gekennzeichnet, dass** im hinteren Teil der Kabine (10) ein Hochkomfortsitz (11) in der Nähe einer hinteren Tür (60) zumindest teilweise in einen Raum (21) in einem Teil eines Küchenmoduls (24) erstrecken kann.

9. Flugzeug nach einem der Ansprüche 1 bis 8, **dadurch gekennzeichnet, dass** im hinteren Teil der Kabine (10) ein sogenanntes Hybridmodul umfasst:
- einen ersten Teil (61) mit einem Küchenmodul (24), und
- einen zweiten Teil (62) mit zwei durch eine Trennwand (63) oder einen Vorhang voneinander getrennten Hochkomfortsitze (11).

10. Flugzeug nach einem der Ansprüche 1 bis 9, **dadurch gekennzeichnet, dass** der Hochkomfortsitz (11) eine ausziehbare Sitzfläche (12), eine neigbare Rückenlehne (13) bis zu 45 Grad gegenüber der Vertikalen, eine Beinstütze (14) und eine relativ zur Beinstütze (14) ausziehbare Fußstütze (15) umfasst.

## Claims

1. An aircraft comprising:
- an aircraft cabin containing passenger seats, and
- an aircraft cabin arrangement (10) comprising:
- at least one crew seat, so-called a high-comfort seat (11), able to come into a storage position, a seating position, and at least one rest position, and
- at least one cabinet (18),
said high-comfort seat being integrated in said aircraft cabin, in particular of the single-aisle type, and installed in a space (21) in the cabinet (18), or able to extend at least partly into a space (21) in the cabinet (18), when said high-comfort seat (11) is in the rest position, **characterized in that**, in the front part of the cabin (10), an arrangement is selected from:
- a first arrangement, in which the cabinet (18) comprises:
- two footrests (32) for adjacent passenger seats (33),
- two storage compartments (37), and
- a standard crew seat (36) able to come into a storage position and a seating position, said standard crew seat (36) being positioned between the two storage compartments (37), so that the high-comfort seat (11) extends at least partly into the space (21) in the cabinet (18) between the two storage compartments (37), when the high-comfort seat (11) is in the rest position and the standard crew seat (36) is in the storage position, or
- a second arrangement, in which the standard crew seat (36) is attached to a sanitary module (25), the cabinet (18) comprising:
- two footrests (32) for the adjacent passenger seats (33),
- a high-comfort seat (11), particularly oriented towards the moving direction,
- two storage compartments (37) on either side of the high-comfort seat (11), so that the high-comfort seat (11) is located in a space (21) between the two storage compartments (37),
- the high-comfort seat (11) facing the standard crew seat (36), so that the high-comfort seat (11) can come into a rest position, when the standard crew seat (36) is in the storage position.

2. The aircraft according to claim 1, **characterized in that** the cabinet (18) is chosen in particular from one of the following cabinets: a kitchen module (24), a sanitary module (25), or a storage module.

3. The aircraft according to claim 1 or 2, **characterized in that** the high-comfort seat (11) is physically separated from an area dedicated to passengers.

4. The aircraft according to claim 1, **characterized in that** the cabinet (18) further comprises:
- a retractable partition (40) extending along an aisle (31) to ensure direct vision in a seating position, and/or
- a curtain (41) between the sanitary module (25) and the cabinet (18) on the side of an aisle (31) for isolating the high-comfort seat (11).

5. The aircraft according to any one of the claims 1 to 4, **characterized in that**, in the middle of the cabin (10), a rest module (44) for separating a business class (45) and an economy class (46) from one another includes:
- a front partition (49) and a rear partition (50) for isolating the rest module (44),
- two high-comfort seats (11) positioned side by side,
- a curtain or a movable partition (53) for ensuring a separation from an aisle (31) in the cabin (10), and
- a curtain or a movable partition (54) for ensuring a separation between the two high-comfort seats (11).

6. The aircraft according to any one of the claims 1 to 5, **characterized in that**, in the middle of the cabin, a rest module (44'), ensuring the separation between two areas in the cabin, for example between a business class and an economical class, includes:
- a front partition (49) and a rear partition (50) for isolating the rest module (44'),
- a high-comfort seat (11) mounted on the side of a fuselage (57) towards or opposite the moving direction, and
- an auxiliary module (25) mounted on the side of an aisle (31).

7. The aircraft according to claim 6, **characterized in that** the auxiliary module is chosen from one of the following modules: a sanitary module (25), a kitchen module (24), a storage compartment (37) or a self-service module.

8. The aircraft according to any one of the claims 1 to 7, **characterized in that**, in the rear part of the cabin (10), a high-comfort seat (11) near a rear door (60) is able to extend at least partially into a space (21) in a part of a kitchen module (24).

9. The aircraft according to any one of the claims 1 to 8, **characterized in that**, in the rear part of the cabin (10), a so-called hybrid module comprises:
- a first part (61) integrating a kitchen module (24), and
- a second part (62) integrating two high-comfort seats (11) separated from one another by a partition (63) or a curtain.

10. The aircraft according to any one of the claims 1 to 9, **characterized in that** the high-comfort seat (11) comprises an extendable seating surface (12), a inclinable backrest (13) up to 45 degrees relative to the vertical, a legrest (14) and a footrest (15) extendable relative to the legrest (14).
